(19) Europäisches Patentamt
European Patent Office
Office européen des brevets

(11) **EP 4 687 000 A1**

(12) **DEMANDE DE BREVET EUROPEEN**

(43) Date de publication:
**04.02.2026 Bulletin 2026/06**

(21) Numéro de dépôt: **25190117.9**

(22) Date de dépôt: **17.07.2025**

(51) Classification Internationale des Brevets (IPC):
**G05D 1/654** (2024.01) **G05D 1/81** (2024.01)
**G05D 105/22** (2024.01) **G05D 107/13** (2024.01)
**G05D 109/22** (2024.01) **G08G 5/00** (2025.01)

(52) Classification Coopérative des Brevets (CPC):
**G05D 1/817; B64D 45/04; G05D 1/6548;
G08G 5/21; G08G 5/23; G08G 5/53; G08G 5/54;
G08G 5/55; G08G 5/58;** G05D 2105/22;
G05D 2107/13; G05D 2109/22

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**GE KH LA MA MD TN**

(30) Priorité: **02.08.2024 FR 2408600**

(71) Demandeur: **Airbus (S.A.S.)
31700 Blagnac (FR)**

(72) Inventeurs:
• **PUISSACQ, Cécile
TOULOUSE (FR)**
• **CAPRA, Laurent
Blagnac (FR)**

(74) Mandataire: **Airbus-OPS SAS
LLF-M0101/1
316, route de Bayonne
31060 Toulouse Cedex (FR)**

(54) **PROCÉDÉ ET SYSTÈME DE DÉTECTION D'UN PILOTAGE INAPPROPRIÉ LIÉ À UNE DÉSORIENTATION SPATIALE D'AU MOINS UN PILOTE ET DE PROTECTION D'UN AÉRONEF CONTRE LEDIT PILOTAGE INAPPROPRIÉ**

(57) L'invention concerne un système et un procédé de détection et de protection d'un aéronef contre un pilotage inapproprié d'un pilote subissant potentiellement une désorientation spatiale liée à une illusion somatogravique. Le procédé comprend : obtenir (401) des informations de vol et des informations d'état ; estimer (402) une valeur courante d'un degré d'assiette longitudinale perçue à partir desdites informations de vol, calculer (403) une différence entre ladite valeur courante du degré d'assiette longitudinale perçue et une valeur courante d'un degré d'assiette longitudinale réelle et lorsque cette différence est supérieure ou égale à un seuil prédéterminé d'écart d'assiette longitudinale, alors déterminer (406) si une action de pilotage effectuée par ledit au moins un pilote est inapproprié à partir des informations d'état de l'aéronef et lorsque l'action de pilotage effectuée est inappropriée, alors activer (408) une mesure de protection. Il est possible de détecter des conditions de vol propices à l'apparition d'illusions somatograviques, ainsi que les signes de désorientation spatiale des pilotes entraînant un pilotage inapproprié de l'aéronef.

Fig. 4

EP 4 687 000 A1

**Description**

DOMAINE TECHNIQUE

Le domaine de la présente divulgation concerne la protection d'un aéronef contre un pilotage inapproprié du personnel navigant technique (i.e. un pilote) lorsque ce dernier est potentiellement victime de désorientation spatiale liée à une illusion sensorielle du type « nez-haut » (également appelée illusion sensorielle sur l'axe longitudinal, ou illusion sensorielle en tangage, ou encore illusion somatogravique). Plus particulièrement, la présente divulgation concerne un procédé et un système de détection d'un pilotage inapproprié lié à une désorientation spatiale d'au moins un pilote et de protection d'un aéronef contre ce pilotage inapproprié dans le cas d'une potentielle désorientation spatiale liée à une illusion somatogravique.

ETAT DE LA TECHNIQUE ANTÉRIEURE

Dans certaines conditions de vol, les pilotes (i.e., pilote aux commandes et pilote surveillant) d'un aéronef peuvent être victimes d'une désorientation spatiale et ainsi piloter l'aéronef de manière inappropriée. C'est le cas, par exemple, lorsque les accélérations de l'aéronef peuvent induire une sensation imprécise d'assiette longitudinale (e.g., lors de la phase de remise des gaz ou « Go-Around » en anglais, lorsque la poussée est maximale).

Cette désorientation spatiale peut être provoquée par des illusions sensorielles dites « vestibulaires », c'est-à-dire liées au fonctionnement mécanique des structures de l'oreille interne et à la perception physique des mouvements. Par exemple, lors de la phase de « Go-Around », le système vestibulaire des pilotes subit une accélération longitudinale et verticale ce qui peut induire des illusions dites « somatograviques », aussi appelées illusions de type « nez-haut » (« head-up illusion » en anglais). Les pilotes peuvent alors être victimes d'une désorientation spatiale de type longitudinale qui se traduit par une illusion de montée ou de descente et interprètent, à tort, comme une force verticale la résultante des forces de pesanteur et d'inertie. Autrement dit, le système vestibulaire des pilotes subit l'effet des accélérations ce qui engendre une différence entre l'assiette longitudinale (i.e., attitude en tangage, ou « pitch attitude » en anglais) réelle de l'aéronef et l'assiette longitudinale perçue par les pilotes.

Cette désorientation spatiale peut être plus prononcée notamment dans des situations où les repères visuels externes sont perdus (e.g., dans les nuages, ou lorsque la pluie tombe sur le pare-brise de l'aéronef) ou en cas de stress intense, où les pilotes peuvent être fortement distraits et ne plus se référer aux repères visuels externes pourtant toujours disponibles.

Afin de limiter les risques liés à la désorientation spatiale, les pilotes sont formés à ne pas se référer à leur perception physique, et à contrôler minutieusement et se fier aux informations de la cabine de pilotage *(« cockpit »* en anglais). Cependant, des incidents et des accidents d'aéronef se produisent encore, montrant que, malgré leur entraînement, les pilotes sont soumis à l'influence de ces illusions sensorielles et peuvent piloter un aéronef en fonction d'une perception physique erronée.

Par ailleurs, afin de respecter des contraintes règlementaires et de certification des aéronefs, il existe des systèmes permettant une remise des gaz dite « à poussée réduite » au cours de laquelle l'accélération longitudinale est réduite pour limiter l'apparition d'illusions somatograviques pendant la phase de *« Go-Around ».* Toutefois, ce type de systèmes ne permet pas, actuellement, d'agir sur l'accélération verticale qui contribue également à l'apparition d'illusions sensorielles (e.g. illusions somatograviques). Il existe donc toujours un risque que les pilotes soient victimes d'une désorientation spatiale.

Dans un autre exemple, il existe des systèmes d'information permettant de comparer l'assiette longitudinale réelle avec l'assiette longitudinale perçue par les pilotes (i.e., telle que perçue par le système vestibulaire des pilotes) et d'émettre, à partir de cette comparaison, une alerte lorsque les conditions de vol sont susceptibles d'entraîner une désorientation spatiale des pilotes. Il est ainsi possible de prédire le moment où les pilotes peuvent être désorientés dans l'espace et de les alerter sur cette possibilité.

Toutefois, les systèmes de protection actuels contre le pilotage inapproprié de l'aéronef lié à la désorientation spatiale des pilotes ne prennent en compte que la détection d'un risque de désorientation spatiale, et non la détection de cas confirmés où le ou les pilotes se soumettent à l'illusion sensorielle (e.g., illusion somatogravique) et appliquent des actions de pilotage inappropriées (e.g., action de pilotage visant à commander un piqué de l'aéronef qui s'avère inapproprié à la phase de vol courante).

Il est alors souhaitable de pallier ces inconvénients de l'état de la technique afin d'améliorer la situation en ajoutant une protection à ce qui est aujourd'hui recommandé par les Autorités pour respecter la conformité aux nouvelles contraintes réglementaires de certification.

Il est notamment souhaitable de fournir une solution qui permette non seulement de détecter les conditions de vol propices à l'apparition d'illusions somatograviques, mais également de détecter les situations où les pilotes montrent effectivement des signes de soumission à cette illusion somatogravique, comme par exemple un pilotage inapproprié de l'aéronef simultanément à la détection d'un tel risque de soumission à une illusion somatogravique. En outre, il est souhaitable de fournir une solution qui permette de corriger ce pilotage inapproprié de l'aéronef lorsque le ou les pilotes sont potentiellement victimes de désorientation spatiale.

EXPOSÉ DE L'INVENTION

Il est proposé ici un procédé de détection d'un pilotage inapproprié lié à une désorientation spatiale liée à une illusion somatogravique subie par au moins un pilote et de protection d'un aéronef contre ledit pilotage inapproprié. Ce procédé est implémenté dans un système de détection et de protection comprenant de la circuiterie électronique configurée pour:

- obtenir des informations de vol et des informations d'état de l'aéronef ;
- estimer une valeur courante d'un degré d'assiette longitudinale perçu ($\Theta_{perçu}$), tel que perçu par ledit au moins un pilote à partir desdites informations de vol obtenues, selon la formule suivante :

$$\theta_{perçu} = Arctan(\frac{-Nx_{1_{cockpit}}}{Nz_{1_{cockpit}}})$$

où $Nx1_{cockpit}$ est une mesure à l'instant t de l'accélération longitudinale de l'aéronef, dans le référentiel de l'aéronef, et mesurée dans une zone prédéfinie autour du cockpit ; et où $Nz1_{cockpit}$ est une mesure à l'instant t de l'accélération verticale de l'aéronef, dans le référentiel de l'aéronef, et mesurée dans la zone prédéfinie autour du cockpit,

- calculer une différence entre ladite valeur courante du degré d'assiette longitudinale perçu ($\Theta_{perçu}$) et une valeur courante d'un degré d'assiette longitudinale réelle ($\Theta_{réel}$), qui est obtenue à partir des informations de vol obtenues,
- et, lorsque la différence entre la valeur courante du degré d'assiette longitudinale perçue ($\Theta_{perçu}$) et la valeur courante du degré d'assiette longitudinale réelle ($\Theta_{réel}$) est supérieure ou égale à un seuil prédéterminé d'écart d'assiette longitudinale alors, déterminer si une action de pilotage effectuée par ledit au moins un pilote est inappropriée à partir des informations d'état de l'aéronef obtenues,
- et, lorsque l'action de pilotage effectuée est inappropriée alors activer une mesure de protection contre le pilotage inapproprié.

Ainsi, il est possible, non seulement de détecter des conditions de vol propices à l'apparition d'illusions somatograviques, mais également de détecter si les pilotes se soumettent à cette illusion somatogravique et présentent des signes de désorientation spatiale entraînant un pilotage inapproprié de l'aéronef. En conséquence, il est ainsi possible d'activer une mesure de protection de l'aéronef contre ce pilotage inapproprié.

Selon un mode de réalisation, la mesure de protection est activée lorsque la valeur courante du degré d'assiette longitudinale réelle ($\Theta_{réel}$) est inférieure ou égale à un seuil prédéterminé d'assiette longitudinale réelle.

Selon un mode de réalisation, activer la mesure de protection comprend : estimer une projection anticipée d'une assiette longitudinale, aussi dénommée assiette longitudinale dynamique ($\Theta_{dyn}$), exprimée selon l'équation suivante :

$$\theta_{dyn} = \theta_{réel} + K * \left(\frac{d\theta_{réel}}{dt}\right)$$

Où,

- $\Theta_{réel}$ est le degré d'assiette longitudinale réel courant ;
- K est un gain permettant de pondérer la dynamique de variation du degré d'assiette longitudinale réel $\Theta_{réel}$.

Selon un mode de réalisation, lorsqu'une valeur courante du degré d'assiette longitudinale dynamique ($\Theta_{dyn}$) est supérieure à un seuil prédéterminé d'assiette longitudinale minimale, alors la mesure de protection est désactivée, sinon, un ordre de gouverne est calculé pour corriger l'action de pilotage inappropriée du au moins un pilote.

Selon un mode de réalisation, l'ordre de gouverne calculé se voit attribuer un niveau de priorité, et lorsqu'à l'issue d'un vote ledit niveau de priorité de l'ordre de gouverne calculé est supérieur au niveau de priorité d'au moins une autre mesure de protection différente, alors cet ordre de gouverne est transmis à des actionneurs de gouvernes de l'aéronef.

Selon un mode de réalisation, lorsque ledit ordre de gouverne est transmis auxdits actionneurs de gouvernes de l'aéronef, alors, en outre, un message d'alerte est transmis pour alerter le au moins un pilote que ladite mesure de protection est activée.

Il est également proposé ici un système de détection et de protection pour détecter un pilotage inapproprié lié à une désorientation spatiale liée à une illusion somatogravique subie par au moins un pilote et pour protéger un aéronef contre ledit pilotage inapproprié, ledit système de détection et de protection comprenant de la circuiterie électronique configurée pour:

- obtenir des informations de vol et des informations d'état de l'aéronef ;
- estimer une valeur courante d'un degré d'assiette longitudinale perçu ($\Theta_{perçu}$), tel que perçu par ledit au moins un pilote à partir desdites informations de vol obtenues, selon la formule suivante :

$$\theta_{pe\ çu} = Arctan(\frac{-Nx_{1_{cockpit}}}{Nz_{1_{cockpit}}})$$

où $Nx1_{cockpit}$ est une mesure à l'instant t de l'accélération longitudinale de l'aéronef, dans le référentiel de l'aéronef, et mesurée dans une zone prédéfinie autour du cockpit ; et où $Nz1_{cockpit}$ est une mesure à l'instant t de l'accélération verticale de l'aéronef, dans le référentiel de l'aéronef, et mesurée dans la zone prédéfinie autour du cockpit,
- calculer une différence entre ladite valeur courante du degré d'assiette longitudinale perçu ($\Theta_{perçu}$) et une valeur courante d'un degré d'assiette longitudinale réel ($\Theta_{réel}$), qui est estimée à partir des informations de vol obtenues,
- et, lorsque la différence entre la valeur courante du degré d'assiette longitudinale perçue ($\Theta_{perçu}$) et la valeur courante du degré d'assiette longitudinale réelle ($\Theta_{réel}$) est supérieure ou égale à un seuil prédéterminé d'écart d'assiette longitudinale alors, déterminer si une action de pilotage effectuée par ledit au moins un pilote est inappropriée à partir des informations d'état de l'aéronef obtenues,
- et, lorsque l'action de pilotage effectuée est inappropriée alors activer une mesure de protection contre le pilotage inapproprié.

Il est également proposé ici un aéronef comprenant un système de détection et de protection tel que décrit précédemment.

Il est aussi proposé un produit programme d'ordinateur, comportant des instructions entraînant l'exécution, par un processeur, du procédé évoqué ci-dessus selon l'un quelconque de ses modes de réalisation, lorsque lesdites instructions sont exécutées par le processeur. Il est aussi proposé un support de stockage, stockant de telles instructions.

BRÈVE DESCRIPTION DES DESSINS

Les caractéristiques de la présente divulgation mentionnées ci-dessus, ainsi que d'autres, apparaîtront plus clairement à la lecture de la description suivante d'au moins un exemple de réalisation, ladite description étant faite en relation avec les dessins joints, parmi lesquels :

Fig. 1 illustre schématiquement, en vue de côté, un aéronef équipé d'un système de détection d'un pilotage inapproprié lié à une désorientation spatiale d'au moins un pilote et de protection d'un aéronef contre ce pilotage inapproprié, selon un mode de réalisation ;

Fig. 2 illustre schématiquement le système de détection d'un pilotage inapproprié lié à une désorientation spatiale d'au moins un pilote et de protection d'un aéronef contre ce pilotage inapproprié, selon un mode de réalisation ;

Fig. 3 illustre schématiquement un exemple de plateforme matérielle permettant d'implémenter, sous forme de circuiterie électronique, le système de détection d'un pilotage inapproprié lié à une désorientation spatiale d'au moins un pilote et de protection d'un aéronef contre ce pilotage, selon un mode de réalisation ;

Fig. 4 et Fig. 5 illustrent schématiquement différentes étapes d'un procédé de détection d'un pilotage inapproprié lié à une désorientation spatiale d'au moins un pilote et de protection d'un aéronef contre ce pilotage inapproprié, exécuté par le système de détection et de protection, selon un mode de réalisation.

EXPOSE DETAILLE DE MODES DE RÉALISATION

Le principe général de la présente divulgation concerne la détection de conditions de vol pouvant induire une illusion somatogravique provoquant une désorientation spatiale du ou des pilotes d'un aéronef, ainsi que la détection d'une désorientation spatiale avérée d'au moins un pilote. La présente divulgation concerne en outre la correction d'une action de pilotage inappropriée de la part du ou des pilotes de l'aéronef, lorsqu'ils sont victimes de cette désorientation spatiale, par exemple liée à une illusion somatogravique.

Par action de pilotage inappropriée de la part du ou des pilotes de l'aéronef, on entend une action insuffisante au vu de la manœuvre qui devrait être effectuée (par exemple une action de pilotage visant à commander un piqué de l'aéronef qui s'avère inapproprié à la phase de vol courante) ou une absence d'action de la part du ou des pilotes de l'aéronef. Par exemple, une action à piquer peut être prise en compte comme un signe confirmé de soumission à une illusion somatogravique, de même qu'une absence d'action à cabrer sur le manche latéral pourrait également être due à une illusion somatogravique et prise en compte.

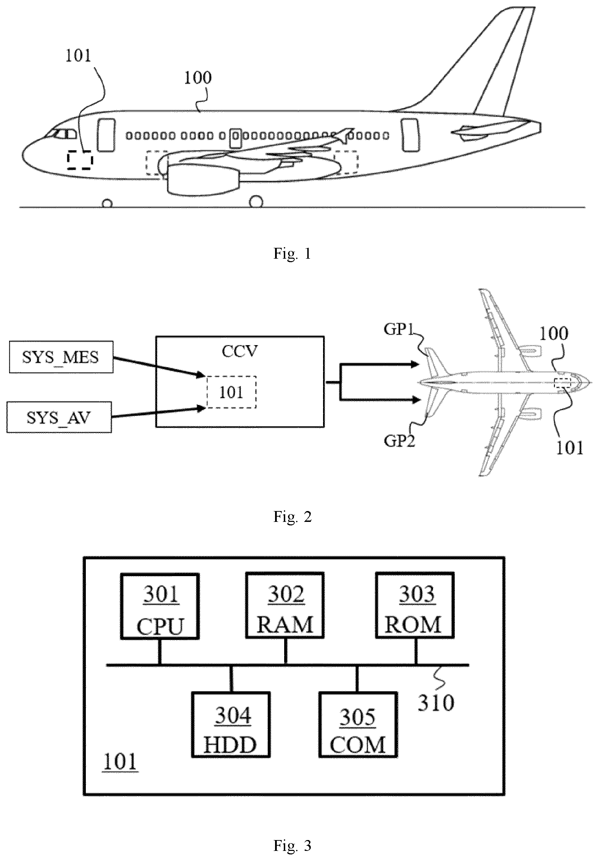

La **Fig.** 1 illustre ainsi schématiquement en vue de côté, un aéronef 100 équipé d'un système 101 de détection d'un pilotage inapproprié lié à une désorientation spatiale d'au moins un pilote et de protection de l'aéronef 100 contre ce pilotage inapproprié en cas de désorientation spatiale d'au moins un pilote (aussi appelé par la suite système de détection et de protection 101), selon un mode de réalisation.

Selon le mode de réalisation de la Fig. 1, le système de détection et de protection 101 est un équipement électronique embarqué dans l'aéronef 100. Par exemple, le système de détection et de protection 101 fait partie d'une circuiterie électronique de l'avionique de l'aéronef 100. Par exemple, le système de détection et de protection 101 est intégré à un calculateur de commandes de vol, noté CCV. Ce calculateur de commandes de vol CCV est, par exemple, un calculateur de commandes de vol primaire *(« Primary Flight Control Computer »* en anglais).

Le système de détection et de protection 101 est schématiquement et globalement illustré sur **la Fig. 2,** selon un mode de réalisation.

Ce système de détection et de protection 101 comprend :

- un premier module M1 de surveillance du risque d'illusion somatogravique (aussi appelé module de surveillance M1),
- un deuxième module M2 de détection d'une action inappropriée d'au moins un pilote (aussi appelé module de détection M2),
- un troisième module M3 de protection contre le pilotage inapproprié de l'aéronef 100 lié à une désorientation spatiale des pilotes (aussi appelé module de protection M3).

Il est à noter que le terme « module » peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en œuvre une fonction ou un ensemble de fonctions.

Le système de détection et de protection 101 est configuré pour recevoir, en temps réel, en provenance d'un ensemble de différents systèmes de mesure, noté SYS_MES, des informations de vol représentatives de paramètres de vol à un instant t du vol de l'aéronef 100. Ces paramètres de vol sont, par exemple : la position géographique de l'aéronef 100, sa vitesse, son cap, son altitude par rapport au sol, son assiette longitudinale (i.e., degré d'attitude en tangage), son accélération longitudinale et/ou verticale dans une zone prédéfinie autour du cockpit de l'aéronef 100, etc. Chaque système de mesure comprend un ensemble de capteurs configurés pour mesurer, en temps réel, un ou plusieurs paramètres de vol de l'aéronef 100. Par exemple, ces capteurs sont : des accéléromètres, des capteurs de pression, des gyroscopes, etc.

Le système de détection et de protection 101 est en outre configuré pour recevoir, en temps réel, des informations d'état de l'aéronef 100 en provenance d'un ensemble de différents systèmes de l'avionique de l'aéronef 100, noté SYS_AV. Ces informations d'états sont représentatives de paramètres d'état de l'aéronef 100 à l'instant t de vol. Ces paramètres d'état sont, par exemple : une position d'un ou plusieurs organes de pilotage (e.g., "mini-manche", aussi appelé « side-stick » en anglais) permettant aux pilotes (i.e., pilote aux commandes et pilote surveillant) de l'aéronef 100 d'agir sur l'assiette longitudinale de ce dernier, le modèle de l'aéronef 100, sa masse, une position de son centre de gravité, une configuration des volets hypersustentateurs *(« flaps »* en anglais) et des becs d'attaque *(« slats »* en anglais), etc.

Selon un mode de réalisation, le système de détection et de protection 101 peut en outre être configuré pour transmettre un message d'alerte à un ou plusieurs systèmes d'alerte et/ou de communication de l'aéronef 100 (non représentés sur la Fig.2) tels que : un calculateur d'alerte de vol *(« Flight Warning Computer »* en anglais ou FWC), un système de surveillance centralisée *(« Electronic Centralized Aircraft Monitoring »* en anglais ou ECAM), un système d'affichage primaire de vol *(« Primary Flight Display »* en anglais ou PFD), etc. Ce message d'alerte annonce aux pilotes l'activation d'une mesure de protection contre le pilotage inapproprié de l'aéronef 100 lié à une potentielle désorientation spatiale de ces derniers. Dans un mode de réalisation, le message d'alerte annonce en outre aux pilotes qu'une mesure de correction d'une action de pilotage inappropriée de l'aéronef 100 est exécutée.

Selon un mode de réalisation, le système de détection et de protection 101 est en outre configuré pour calculer, le cas échéant, un ordre de gouverne (e.g., ordre de gouverne de profondeur) permettant de corriger l'action inappropriée effectuée par le ou les pilotes et pour fournir cet ordre de gouverne au contrôleur de commandes de vol CCV. Le contrôleur de commandes de vol CCV est configuré pour contrôler le mouvement, *via* des actionneurs (non représentés sur la Fig. 2), des gouvernes de l'aéronef 100, telles que les deux gouvernes de profondeur (notées GP1 et GP2). Dans un exemple, le contrôleur de commandes de vol CCV est configuré pour transmettre l'ordre de gouverne calculé par le système de détection et de protection 101 aux actionneurs qui braquent l'une ou l'autre, ou les deux gouvernes de profondeur GP1 et GP2 selon un angle particulier, adapté à la situation de vol courante de l'aéronef 100 (e.g., angle adapté pour effectuer une phase de « *Go-Around* »).

La Fig. 3 illustre schématiquement un exemple de plateforme matérielle permettant d'implémenter, sous forme de circuiterie électronique, le système de détection et de protection 101, selon un mode de réalisation.

La plateforme matérielle comporte, reliés par un bus de communication 310, un processeur ou CPU (« *Central Processing Unit* » en anglais) 301 ; une mémoire vive RAM *(« Random-Access Memory »* en anglais) 302 ; une mémoire morte 303, par exemple de type ROM (« *Read Only Memory* » en anglais) ou EEPROM *(« Electrically-Erasable Programmable ROM »* en anglais), telle qu'une mémoire Flash ; une unité de stockage, telle qu'un disque dur HDD *(« Hard Disk Drive »* en anglais) 304, ou un lecteur de support de stockage, tel qu'un lecteur de cartes SD *(« Secure Digital »* en anglais) ; et un gestionnaire d'interfaces COM 305.

Le gestionnaire d'interfaces COM 305 permet au système de détection et de protection 101 d'interagir avec, par exemple, l'ensemble des systèmes de mesure SYS_MES, l'ensemble des systèmes de l'avionique SYS_AV de l'aéronef 100. Selon un mode de réalisation, le gestionnaire d'interfaces COM 305 permet au système de détection et de protection 101 d'interagir avec des systèmes d'alerte et/ou de communication de l'aéronef 100, comme par exemple : le FWC, l'ECAM, le PFD, etc.

Le processeur 301 est capable d'exécuter des instructions chargées dans la mémoire vive 302 à partir de la mémoire morte 303, d'une mémoire externe, d'un support de stockage (tel qu'une carte SD), ou d'un réseau de communication. Lorsque la plateforme matérielle est mise sous tension, le processeur 301 est capable de lire de la mémoire vive 302 des instructions et de les exécuter. Ces instructions forment un programme d'ordinateur causant l'implémentation, par le processeur 301, de tout ou partie des étapes ou procédés ou plus largement des séquences de fonctionnement de l'aéronef 100 décrites dans la présente description.

Tout ou partie des étapes, procédés et fonctionnements décrits ici peut ainsi être implémenté sous forme logicielle par exécution d'un ensemble d'instructions par une machine programmable, par exemple un processeur de type DSP *(« Digital Signal Processor »* en anglais) ou un microcontrôleur, ou être implémenté sous forme matérielle par une machine ou un composant électronique (« *chip »* en anglais) dédié ou un ensemble de composants électroniques (« *chipset »* en anglais) dédié, par exemple un composant FPGA *(« Field Programmable Gate Array »* en anglais) ou ASIC *(« Application Specific Integrated Circuit »* en anglais). D'une manière générale, le système de détection et de protection 101 comporte de la circuiterie électronique adaptée et configurée pour implémenter tout ou partie des fonctionnements, procédés et étapes décrits ici.

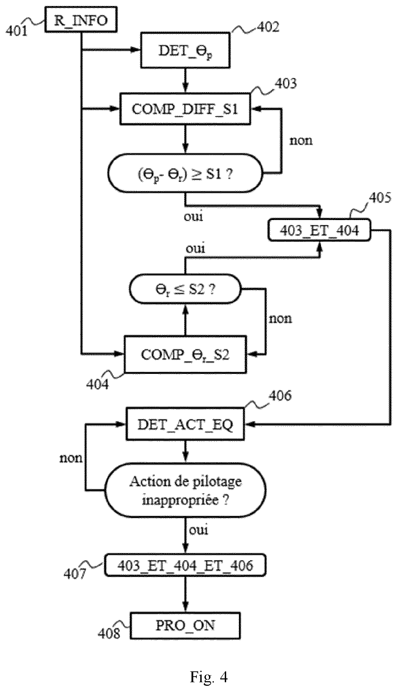

Il est présenté en lien avec la **Fig. 4,** sous forme d'un diagramme des étapes d'un procédé de détection d'un pilotage inapproprié lié à une désorientation spatiale d'au moins un pilote et de protection de l'aéronef 100 contre ce pilotage inapproprié lorsqu'au moins un pilote subit potentiellement une désorientation spatiale (aussi appelé par la suite « procédé de détection et de protection »), selon un mode de réalisation. Tout ou partie de ce procédé de détection et de protection est implémenté par le système de détection et de protection 101 décrit ci-dessus.

Par la suite, à titre d'exemple, l'implémentation du procédé de détection et de protection se fait dans des conditions de vol correspondant à une phase de *« Go-Around ».* En effet, comme présenté précédemment, les conditions d'accélération longitudinale et verticale de la phase de *« Go-Around »* sont propices à l'apparition d'illusions somatograviques pouvant conduire à une désorientation spatiale des pilotes et donc à un pilotage potentiellement inapproprié de l'aéronef 100. Il est à noter que le procédé de détection et de protection peut être implémenté dans des conditions de vol autres que celles correspondant à la manœuvre de remise des gaz (aussi appelée phase de « *Go-Around »).*

Dès le début du vol de l'aéronef 100, c'est-à-dire dès que l'aéronef 100 n'est plus en contact avec le sol, au cours d'une étape 401, notée R_INFO, le système de détection et de protection 101 obtient, en temps réel, en provenance de l'ensemble des systèmes de mesure SYS_MES et de l'ensemble des systèmes de l'avionique SYS_AV de l'aéronef 100, des informations de vol et des informations d'état représentatives, respectivement, de paramètres de vol et de paramètres d'état de l'aéronef 100.

Selon un mode de réalisation, les systèmes de mesure et les systèmes de l'avionique transmettent au système de détection et de protection 101 ces informations de vol et ces informations d'état de l'aéronef 100 selon une fréquence prédéterminée. La fréquence prédéterminée dépend des capacités des sondes ou capteurs de chaque aéronef. Selon un mode de réalisation particulier, cette fréquence prédéterminée dépend de la nature du paramètre (i.e., paramètre de vol ou paramètre d'état). Dans un exemple, la fréquence de transmission d'une information de vol représentative d'un paramètre de vol tel que l'accélération longitudinale est de huit points par seconde.

Selon un mode de réalisation, chaque information de vol ou information d'état est filtrée selon des critères de filtrage prédéterminés. Par exemple, ces critères de filtrage dépendent de la nature du paramètre de vol ou du paramètre d'état. Il est ainsi possible d'éviter une détection intempestive de conditions de vol propices à la manifestation de désorientation spatiale des pilotes. En conséquence, il est ainsi possible d'éviter l'activation inopportune d'une mesure de protection de l'aéronef 100 contre un pilotage inapproprié de l'aéronef 100.

Au cours d'une phase de surveillance des conditions de vol, le système de détection et de protection 101, *via* le module de surveillance M1, détecte des conditions de vol propices à l'apparition d'illusions somatograviques pendant la phase de *« Go-Around ».* En particulier, selon un mode de réalisation, le système de détection et de protection 101 surveille l'assiette longitudinale de l'aéronef 100.

Pour cela, au cours d'une étape 402, notée DET_$\Theta_p$, le système de détection et de protection *101, via* le module de surveillance M1, estime une valeur courante (i.e., à l'instant *t)* d'un degré de l'assiette longitudinale perçue par les pilotes (ci-après « degré d'assiette longitudinale perçu » ou « assiette longitudinale perçue »), noté $\Theta_{perçu}$ (i.e., degré d'attitude en tangage perçu), selon la formule EQ1 suivante :

$$\theta_{perçu} = Arctan(\frac{-Nx_{1_{cockpit}}}{Nz_{1_{cockpit}}})$$

Où,

- Nx1$_{cockpit}$ est une mesure à l'instant t de l'accélération longitudinale de l'aéronef 100, dans le référentiel de l'aéronef 100, et mesurée dans une zone prédéfinie autour du cockpit (e.g., à l'aide d'accéléromètres à l'avant de l'aéronef 100 ou installés sur le cockpit) ;

- Nz1$_{cockpit}$ est une mesure à l'instant t de l'accélération verticale de l'aéronef 100, dans le référentiel de l'aéronef 100, et mesurée dans la zone prédéfinie autour du cockpit (e.g., à l'aide d'accéléromètres à l'avant de l'aéronef 100 ou installés sur le cockpit).

Cette valeur courante de degré d'assiette longitudinale perçu $\Theta_{\text{perçu}}$ correspond à une valeur estimée de l'assiette longitudinale de l'aéronef 100 ressentie par le système vestibulaire des pilotes (au niveau de la position de sa tête).

Ensuite, au cours d'une étape 403, notée COMP_DIFF_S1, le système de détection et de protection 101, *via* le module de surveillance M1, détermine qu'une condition de vol courante est propice à l'apparition d'illusions somatograviques chez les pilotes. Pour cela, le système de détection et de protection 101 calcule la différence entre une valeur courante de degré d'assiette longitudinale perçu $\Theta_{\text{perçu}}$ et une valeur courante du degré de l'assiette longitudinale réelle (ci-après « degré d'assiette longitudinale réel » ou « assiette longitudinale réelle »), noté $\Theta_{\text{réel}}$ (i.e., degré d'attitude en tangage réel). Cette différence correspond à l'écart entre la perception de l'assiette longitudinale de l'aéronef 100 par les pilotes et l'assiette longitudinale réelle de l'aéronef 100. Il est à noter que le degré d'assiette longitudinale réel $\Theta_{\text{réel}}$ est mesuré par un capteur, tel qu'un gyroscope par exemple.

Cette différence entre la valeur courante du degré d'assiette longitudinale perçu $\Theta_{\text{perçu}}$ et la valeur courante du degré d'assiette longitudinale réel $\Theta_{\text{réel}}$ est alors comparée à un seuil prédéterminé d'écart d'assiette longitudinale, noté S1. L'ordre de grandeur de ce seuil prédéterminé d'écart d'assiette longitudinale S1 est compris entre 5° et 10°. Il s'agit ainsi ici de surveiller l'écart entre la perception par l'équipage de l'aéronef 100 et l'assiette longitudinale réelle de l'aéronef 100.

Dans un mode de réalisation particulier, ce seuil prédéterminé d'écart d'assiette longitudinale S1 dépend de l'altitude de l'aéronef 100 par rapport au sol, à un instant donné, noté l'instant t.

Ainsi, si la différence entre la valeur courante du degré d'assiette longitudinale perçu $\Theta_{\text{perçu}}$ et la valeur courante du degré d'assiette longitudinale réel $\Theta_{\text{réel}}$ est inférieure au seuil prédéterminé d'écart d'assiette longitudinale S1 (i.e., réponse « non » à l'issue de l'étape 403), alors cette étape 403 COMP_DIFF_S1 est répétée.

Au contraire, si cette différence est supérieure ou égale au seuil prédéterminé d'écart d'assiette longitudinale S1 (i.e., réponse « oui » à l'issue de l'étape 403), alors le système de détection et de protection 101 exécute une étape 405, notée 403_ET_404. Ainsi, lorsque l'assiette longitudinale perçu $\Theta_{\text{perçu}}$ par les pilotes est supérieure à l'assiette longitudinale réelle $\Theta_{\text{réel}}$ (i.e., telle que mesurée par un ou des capteurs appropriés), au-delà du seuil prédéterminé d'écart d'assiette longitudinale S1, il y existe un risque que les pilotes soient victimes de désorientation spatiale liée à une illusion somatogravique.

Au cours de l'étape 404, notée COMP_$\Theta$r_S2, se déroulant de manière synchrone ou asynchrone avec l'étape 403 COMP_DIFF_S1 décrite ci-dessus, le système de détection et de protection 101, *via* le module de surveillance M1, compare une valeur courante du degré d'assiette longitudinale réel $\Theta_{\text{réel}}$ à un seuil prédéterminé d'assiette longitudinale réelle, noté S2. L'ordre de grandeur de ce seuil prédéterminé d'assiette longitudinale réelle S2 est compris entre 5 et 12°. Il est ainsi possible d'éviter des détections inappropriées de conditions de vol propices à l'apparition d'illusions somatograviques chez les pilotes.

Dans un mode de réalisation particulier, ce seuil prédéterminé d'assiette longitudinale réelle S2 dépend de l'altitude de l'aéronef 100 par rapport au sol à l'instant t.

Si la valeur courante du degré d'assiette longitudinale réel $\Theta_{\text{réel}}$ est supérieure au seuil prédéterminé d'assiette longitudinale réelle S2 (i.e., réponse « non » à l'issue de l'étape 404), alors l'étape 404 est répétée. Si, au contraire, la valeur courante du degré d'assiette longitudinale réel $\Theta_{\text{réel}}$ est inférieure ou égale au seuil prédéterminé d'assiette longitudinale réelle S2 (i.e., réponse « oui » à l'issue de l'étape 404), alors le système de détection et de protection 101 exécute l'étape 405 notée 403_ET_404.

Au cours de l'étape 405, notée 403_ET_404, le système de détection et de protection 101, *via* le module de surveillance M1, vérifie qu'à l'instant *t*, à l'issue de l'étape 404 COMP_$\Theta$r_S2, l'assiette longitudinale réelle $\Theta_{\text{réel}}$ est inférieure ou égale au seuil prédéterminé d'assiette longitudinale réelle S2 (i.e., réponse « oui » à l'issue de l'étape 404) et qu'en outre la différence entre l'assiette longitudinale perçue $\Theta_{\text{perçu}}$ et l'assiette longitudinale réelle $\Theta_{\text{réel}}$ est supérieure ou égale au seuil prédéterminé d'écart d'assiette longitudinale S1 (i.e., réponse « oui » à l'issue de l'étape 403). Si ces deux conditions sont remplies (i.e., réponse « oui » à l'issue de l'étape 404 et réponse « oui » à l'issue de l'étape 403), alors le système de détection et de protection 101 détecte que la condition de vol courante est propice à l'apparition d'illusions somatograviques chez les pilotes.

Au cours d'une phase de surveillance du pilotage de l'aéronef 100, le système de détection et de protection 101, *via* le module de détection M2, détermine si un pilotage de l'aéronef 100 effectué par au moins un pilote est inapproprié. Plus particulièrement, lorsque des conditions de vol propices à l'apparition d'illusions somatograviques chez les pilotes sont détectées à l'issue de la phase de surveillance des conditions de vol, alors le système de détection et de protection 101 détermine si un pilotage de l'aéronef 100 effectué par au moins un pilote est inapproprié.

Pour cela, au cours d'une étape 406, notée DET_ACT_EQ, le système de détection et de protection 101, *via* le module de détection M2, détecte, à l'instant *t*, qu'une action de pilotage sur au moins un organe de pilotage de l'aéronef 100 est effectuée par au moins un pilote. Le système de détection et de protection 101 détermine ensuite si cette action de pilotage est inappropriée (i.e., non adaptée) au regard de la phase de vol courante (e.g., phase de remise des gaz).

Dans un exemple, lorsque l'aéronef 100 se trouve dans une phase de remise des gaz, cette action de pilotage dite « inappropriée » est une action visant à commander un piqué de l'aéronef 100 afin de faire diminuer l'assiette longitudinale (tandis qu'une action appropriée serait de diminuer l'assiette longitudinale pour se stabiliser en palier). Pour cela, le système de détection et de protection 101 reçoit en provenance d'un ou plusieurs systèmes de l'avionique de l'aéronef 100 appartenant à l'ensemble de systèmes de l'avionique SYS_AV, une information d'état représentative d'un paramètre d'état de l'aéronef 100 tel que la position des organes de pilotage permettant de commander l'assiette longitudinale de l'aéronef 100.

Ainsi, dans cet exemple, si le système de détection et de protection 101 ne détecte aucune action sur les organes de pilotage par les pilotes ou si une action de pilotage est détectée, mais qu'elle n'est pas inappropriée au regard de l'état de l'aéronef 100, et en particulier de l'assiette longitudinale de l'aéronef (i.e., réponse « non » à l'issue de l'étape 406), alors l'étape 406 est répétée. Au contraire, si le système de détection et de protection 101 détecte qu'une action de pilotage inappropriée, par exemple une action inappropriée à piquer (longitudinale) sur au moins un organe de pilotage (e.g., action visant à commander un piqué de l'aéronef 100 à l'aide d'un organe de pilotage, du type mini-manche par exemple) est effectuée par au moins un pilote alors que l'assiette longitudinale de l'aéronef 100 est déjà faible (i.e., réponse « oui » à l'issue de l'étape 406), alors le système de détection et de protection 101 exécute une étape 407, notée 403_ET_404_ET_406.

En outre, lorsqu'une action de pilotage inappropriée sur au moins un organe de pilotage est détectée, le système de détection et de protection 101 effectue une temporisation qui permet de laisser du temps aux pilotes pour réagir eux-mêmes et corriger cette action de pilotage inappropriée. Dans un exemple, le système de détection et de protection 101 fait passer une variable i d'une valeur 0 à 1 en appliquant un retard (en secondes), noté T, prédéterminé fixe (e.g., 2 à 8 s) et/ou dépendant de l'altitude de l'aéronef 100 et de l'assiette longitudinale réelle $\Theta_{réel}$.

A l'issue des phases de surveillance des conditions de vol (i.e., étapes 402 à 405) et de surveillance du pilotage de l'aéronef 100 (i.e., étape 406), au cours de l'étape 407, notée 403_ET_404_ET_406, le système de détection et de protection 101 vérifie :

- qu'à l'issue de l'étape 404 COMP_$\Theta$r_S2, l'assiette longitudinale réelle $\Theta_{réel}$ est inférieure ou égale au seuil prédéterminé d'assiette longitudinale réelle S2 (i.e., réponse « oui » à l'issue de l'étape 404) et,
- que la différence entre l'assiette longitudinale perçue $\Theta_{perçu}$ et l'assiette longitudinale réelle $\Theta_{réel}$ est supérieure ou égale au seuil prédéterminé d'écart d'assiette longitudinale S1 (i.e., réponse « oui » à l'issue de l'étape 403), et
- qu'une action de pilotage inappropriée, par exemple, sur au moins un organe de pilotage est effectuée par au moins un pilote (i.e., réponse « oui » à l'issue de l'étape 406).

Ainsi, lorsque les conditions précédentes sont remplies (i.e., réponse « oui » à l'issue des étapes 403, 404 et 406), alors le système de détection et de protection 101 détecte que le ou les pilotes subissent potentiellement une désorientation spatiale et pilote de manière inappropriée l'aéronef 100 probablement à cause de cette désorientation spatiale.

Il est ainsi possible, en comparant une estimation de l'assiette longitudinale de l'aéronef 100 telle que perçue par les pilotes ($\Theta_{perçu}$) à l'assiette longitudinale de l'aéronef 100 réelle ($\Theta_{réel}$), de détecter une situation où le pilote est potentiellement victime d'illusions somatograviques, et, se fiant sans doute à son seul ressenti plutôt qu'à ses instruments ou aux alertes des différents systèmes (e.g., système avertisseur de proximité du sol ou « *Ground Proximity Warning system* » en anglais ou GPWS), effectue des actions de pilotage inappropriées (e.g., actions visant à commander un piqué de l'aéronef 100) pouvant, *in fine,* aboutir à la destruction de l'aéronef 100 par contact avec le terrain (ou « *Control Flight Into Terrain* » en anglais ou CFIT).

En conséquence, le système de détection et de protection 101, *via* le module de protection M3, active, au cours d'une étape 408 notée PRO_ON, la mesure de protection de l'aéronef 100 contre le pilotage inapproprié (aussi appelée par la suite « mesure de protection »).

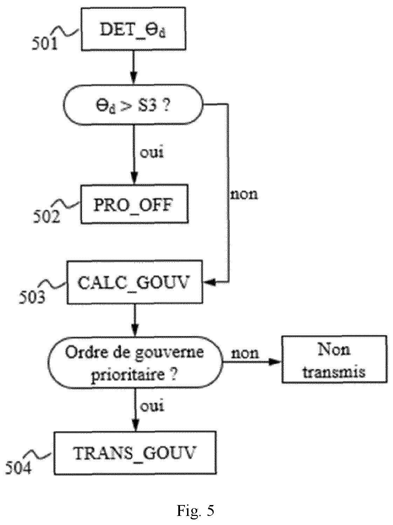

Il est présenté en lien avec la **Fig. 5,** sous forme d'un diagramme des étapes du procédé de détection et de protection après activation de la mesure de protection (i.e., étape 408 PRO_ON), selon un mode de réalisation. Les étapes 501 et 504 décrites ci-après sont implémentées par le module de détection M3 du système de détection et de protection 101.

Lorsque cette mesure de protection est activée (i.e., étape 408 PRO_ON), alors, au cours d'une étape 501, notée DET_$\Theta$d, le système de détection et de protection 101 estime une anticipation de l'assiette longitudinale réelle de l'aéronef 100, prenant en compte son évolution courante à l'instant t, appelé assiette longitudinale dynamique notée $\Theta_{dyn}$ à partir de la formule EQ2 suivante :

$$\theta_{dyn} = \theta_{réel} + K * \left(\frac{d\theta_{réel}}{dt}\right)$$

Où,

- K est un gain permettant de prendre en compte la dynamique de variation de l'assiette longitudinale réelle $\Theta_{réel}$.

L'estimation de l'assiette longitudinale dynamique $\Theta_{dyn}$ permet d'adapter la mesure de protection.

Par exemple, si l'assiette longitudinale réelle de l'aéronef 100 est en train de revenir vers des valeurs plus raisonnables, il n'est pas nécessaire d'intervenir aussi fort que si l'assiette longitudinale réelle de l'aéronef 100 continue à diminuer.

Après avoir estimé l'assiette longitudinale dynamique, notée $\Theta_{dyn}$, le système de détection et de protection 101 compare l'assiette longitudinale dynamique $\Theta_{dyn}$ à un seuil prédéterminé d'assiette longitudinale minimal, noté S3.

Dans un mode de réalisation particulier, ce seuil prédéterminé d'assiette longitudinale minimal S3 dépend de l'altitude de l'aéronef 100 par rapport au sol à l'instant t.

Lorsqu'une valeur courante de l'assiette longitudinale dynamique $\Theta_{dyn}$ est supérieure au seuil prédéterminé d'assiette longitudinale minimal S3 (i.e., réponse « oui » à l'issue de l'étape 501), alors la mesure de protection est désactivée au cours d'une étape 502, notée PRO_OFF. En conséquence, le système de détection et de protection 101 ne calcule aucun ordre de gouverne afin de corriger l'assiette longitudinale réelle de l'aéronef 100 en réponse à un pilotage inapproprié de l'aéronef 100. La mesure de protection n'est plus active puisque l'aéronef 100 a atteint l'assiette longitudinale minimale ciblée (i.e., seuil prédéterminée d'assiette longitudinale réelle $\Theta_{réel}$). Autrement dit, selon l'écart entre l'assiette longitudinale réelle ($\Theta_{réel}$) et l'assiette longitudinale minimale ciblée (i.e., seuil prédéterminée d'assiette longitudinale réelle $\Theta_{réel}$), la mesure de protection reste active ou non. Tant qu'une valeur courante de l'assiette longitudinale dynamique $\Theta_{dyn}$ reste inférieure ou égale au seuil prédéterminé d'assiette longitudinale minimal S3, la mesure de protection reste activée.

Au contraire, lorsqu'une valeur courante de l'assiette longitudinale dynamique $\Theta_{dyn}$ est inférieure au seuil prédéterminé d'assiette longitudinale minimal S3 (i.e., réponse « non » à l'issue de l'étape 501), alors le système de détection et de protection 101 exécute une étape 503, notée CALC_GOUV. Autrement dit, la mesure de protection exécutée par le système de détection et de protection 101 permet, le cas échéant, le calcul d'un ordre de gouverne visant à corriger l'assiette longitudinale de l'aéronef 100 en réponse à l'action de pilotage inappropriée de l'aéronef 100 du ou des pilotes.

Au cours de l'étape 503 CALC_GOUV, le système de détection et de protection 101 calcule cet ordre de gouverne à destination d'actionneurs de gouvernes, telles que les gouvernes de profondeurs, afin de corriger l'assiette longitudinale de l'aéronef 100 en réponse à l'action de pilotage inappropriée de l'aéronef 100 du ou des pilotes.

Cet ordre de gouverne est calculé à partir de certaines informations de vol et de certaines informations d'état obtenues préalablement au cours de l'étape 401 R_INFO. En particulier, cet ordre de gouverne dépend de la valeur à l'instant t de l'assiette longitudinale réelle $\Theta_{réel}$, du type de modèle de l'aéronef 100, de la masse de l'aéronef 100 et de son centre de gravité à l'instant t, de la configuration des volets hypersustentateurs et des becs d'attaque et de la valeur, à l'instant t, de divers autres paramètres de vol et de paramètres d'état de l'aéronef 100. Cet ordre de gouverne dépend en outre du seuil prédéterminé d'assiette longitudinale minimal S3. Dans un exemple, cet ordre de gouverne correspond à un ordre à cabrer l'aéronef 100 afin de s'opposer à l'ordre à piquer inapproprié d'au moins un pilote et ce jusqu'à ramener l'aéronef 100 à une assiette longitudinale telle que :

- le risque immédiat de CFIT peut être considéré comme suffisamment réduit ;

- l'écart entre l'assiette longitudinale réelle de l'aéronef 100 et l'assiette longitudinale perçue par les pilotes réduit le risque de soumission à des désorientations spatiales.

Ainsi, l'activation de la mesure de protection comprend :

- estimer une l'assiette longitudinale dynamique ($\Theta_{dyn}$) ;

- vérifier un écart entre la valeur courante de l'assiette longitudinale dynamique ($\Theta_{dyn}$) de l'aéronef et un seuil prédéterminé d'assiette longitudinale minimal S3 ;

- le cas échéant, calculer un ordre de gouverne (e.g., un ordre de gouverne de profondeur) pour corriger l'action de pilotage inappropriée du au moins un pilote (e.g., pour cabrer l'aéronef).

A l'issue de l'étape 503 CALC_GOUV, l'ordre de gouverne calculé par le système de détection et de protection 101 se voit attribuer un niveau de priorité, par exemple par un module de vote d'un système de l'avionique de l'aéronef 100. Ce niveau de priorité dépend, par exemple, de critères de décision comme par exemple l'ordre qui entend faire le plus cabrer l'aéronef 100 aura le niveau de priorité le plus élevé.

Le niveau de priorité de l'ordre de gouverne calculé par le système de détection et de protection 101 est ensuite comparé à d'autres niveaux de priorité attribués à d'autres mesures de protection par différents systèmes de protection avioniques de l'aéronef 100 (e.g., mesure de protection décrite dans la demande de brevet de la Demanderesse publiée sous le numéro FR2986876 et décrivant une mesure de protection automatique d'aéronef contre un risque de collision avec le sol ou la mer appelé GCoP (sigle de « *Ground Collision Protection* », c'est-à-dire « Protection contre une collision avec le sol » en français). Ces autres mesures de protection visant également à transmettre un ordre de gouverne pour l'actionnement des gouvernes de profondeur.

Pour opérer le choix de l'ordre de gouverne à appliquer, le module de vote d'un système de l'avionique de l'aéronef 100 compare, par exemple, les niveaux de priorité des différents ordres de gouverne calculés par les différentes mesures de protection. Ainsi, c'est l'ordre de gouverne qui a le niveau de priorité le plus élevé qui est retenu comme prioritaire par le module de vote et c'est cet ordre qui est appliqué.

Si le niveau de priorité de l'ordre de gouverne calculé par le système de détection et de protection 101 est supérieur au niveau de priorité des autres mesures de protection (e.g., ordre de gouverne calculé pour la mesure de protection GCoP), alors l'ordre de gouverne calculé par le système de détection et de protection 101 est prioritaire. En conséquence, le système de détection et de protection 101 exécute une mesure de correction de l'action de pilotage inappropriée correspondant à une transmission de l'ordre de gouverne préalablement calculé aux actionneurs de gouvernes, telles que les gouvernes de profondeur de l'aéronef 100, *via* le calculateur de commandes de vol CCV, au cours d'une étape 504 notée TRANS_GOUV. Au contraire, si le niveau de priorité de l'ordre de gouverne calculé par le système de détection et de protection 101 est inférieur au niveau de priorité des autres mesures de protection, alors cet ordre de gouverne n'est pas transmis et c'est l'ordre de gouverne d'une autre mesure de protection qui est alors transmis aux gouvernes de profondeur, par exemple. Si l'ordre de gouverne calculé par le système de détection et de protection 101 n'est pas prioritaire, cela signifie soit qu'un autre ordre à cabrer plus important a été envoyé par un autre système de protection, soit que l'ordre à cabrer est trop important et est moins prioritaire qu'un ordre à piquer (qui reste généralement prioritaire pour protéger l'aéronef d'un potentiel décrochage).

Selon un mode de réalisation, le procédé de détection et de protection prend fin après la transmission des ordres de gouverne.

Il est à noter que la mesure de protection décrite ci-dessus ne devrait pas empêcher le pilote de faire atterrir l'aéronef 100. En effet, comme indiqué ci-dessus, cette mesure de protection n'est activée qu'en cas de situation potentielle d'illusion somatogravique détectée, ce qui ne devrait pas être le cas lorsque le pilote veut atterrir car alors, l'accélération longitudinale de l'aéronef 100 (principal contributeur au phénomène d'illusion somatogravique) est faible en raison de la sélection d'un niveau réduit de poussée en vue de la manœuvre d'atterrissage.

Ainsi, grâce à cette mesure de protection implémentée par le système de détection et de protection 101, il est possible de compléter les systèmes actuels, déjà implémentés dans certains aéronefs qui ont pour but de limiter l'accélération longitudinale en phase de remise des gaz. En particulier, cette mesure de protection permet, le cas échéant, d'appliquer la mesure de correction décrite ci-dessus, dans le but de corriger l'action de pilotage inappropriée du ou des pilotes.

Dans un mode de réalisation particulier, au cours de l'étape 504 TRANS_GOUV, lorsque l'ordre de gouverne calculé par le système de détection et de protection 101 est prioritaire, alors le système de détection et de protection 101 pourrait générer un message d'alerte à l'attention des pilotes et le transmettre à des systèmes d'alerte et/ou de communication de l'aéronef 100. Ce message d'alerte viserait à annoncer aux pilotes l'activation de la mesure de protection contre le pilotage inapproprié de l'aéronef 100. Selon un mode de réalisation particulier, le message d'alerte annoncerait en outre l'exécution de la mesure de correction de l'action de pilotage inappropriée. Le système de détection et de protection 101 transmettrait ce message d'alerte à des systèmes d'alerte et/ou de communication de l'aéronef 100, tels que l'ECAM, le PFD ou le FWC... afin que ce message d'alerte soit affiché et/ou diffusé sur une interface Homme-machine du cockpit de l'aéronef 100. Dans un exemple, ce message d'alerte serait une notification visuelle et/ou sonore sous la forme d'avertissement (« *warning* » en anglais) ou de mise en garde *(« advisory caution »* en anglais). Ainsi, l'activation de cette mesure de protection, ainsi que, le cas échéant, l'exécution de la mesure de correction de l'action de pilotage inappropriée, s'accompagnerait d'un affichage et/ou d'une diffusion d'un message d'alerte à l'attention des pilotes afin de les avertir de l'activation de cette mesure de protection et, le cas échéant, d'inciter les pilotes à arrêter d'appliquer des ordres inappropriés à piquer.

Il est à noter que l'expérience démontre qu'en cas de stress intense, et notamment dans les cas où le pilote présente une focalisation d'attention *(« attentional tunneling »* en anglais), un message d'alerte seul ne serait pas utile et serait secondaire à la mesure de protection (compensatoire). Il est donc possible d'associer le message d'alerte à la mesure de protection implémentée par le système de détection et de protection 101, cette mesure de protection étant donc le moyen premier de réduction du risque de la perte de contrôle de l'aéronef 100.

Dans un mode de réalisation particulier, en complément du seuil prédéterminé d'assiette longitudinale minimal S3, un seuil prédéterminé minimal de radio-altitude S4 est utilisé. Ainsi, plus l'altitude radio est basse, plus la détection d'une condition de vol propice à l'apparition d'illusion somatogravique doit être confirmée rapidement. En conséquence, il est possible de limiter cette détection en fonction de l'altitude de l'aéronef 100 à l'instant t.

## Revendications

1. Procédé de détection d'un pilotage inapproprié lié à une désorientation spatiale liée à une illusion somatogravique subie par au moins un pilote et de protection d'un aéronef (100) contre ledit pilotage inapproprié, ledit procédé étant implémenté dans un système de détection et de protection (101) comprenant de la circuiterie électronique configurée pour:

- obtenir (401) des informations de vol et des informations d'état de l'aéronef (100) ;
- estimer (402) une valeur courante d'un degré d'assiette longitudinale perçu ($\Theta_{perçu}$), tel que perçu par ledit au moins un pilote à partir desdites informations de vol obtenues, selon la formule suivante :

$$\theta_{perçu} = Arctan(\frac{-Nx_{1_{cockpit}}}{Nz_{1_{cockpit}}})$$

où $Nx1_{cockpit}$ est une mesure à l'instant t de l'accélération longitudinale de l'aéronef (100), dans le référentiel de l'aéronef (100), et mesurée dans une zone prédéfinie autour du cockpit ; et

où $Nz1_{cockpit}$ est une mesure à l'instant t de l'accélération verticale de l'aéronef (100), dans le référentiel de l'aéronef (100), et mesurée dans la zone prédéfinie autour du cockpit,

- calculer (403) une différence entre ladite valeur courante du degré d'assiette longitudinale perçu ($\Theta_{perçu}$) et une valeur courante d'un degré d'assiette longitudinale réel ($\Theta_{réel}$), qui est obtenue à partir des informations de vol obtenues,
- et, lorsque la différence entre la valeur courante du degré d'assiette longitudinale perçu ($\Theta_{perçu}$) et la valeur courante du degré d'assiette longitudinale réel ($\Theta_{réel}$) est supérieure ou égale à un seuil prédéterminé d'écart d'assiette longitudinale (S1) alors, déterminer (406) si une action de pilotage effectuée par ledit au moins un pilote est inappropriée à partir des informations d'état de l'aéronef (100) obtenues,
- et, lorsque l'action de pilotage effectuée est inappropriée alors activer (408) une mesure de protection contre le pilotage inapproprié.

2. Procédé de protection selon la revendication 1, dans lequel ladite mesure de protection est activée lorsque la valeur courante du degré d'assiette longitudinale réel ($\Theta_{réel}$) est inférieure ou égale à un seuil prédéterminé d'assiette longitudinale réelle (S2).

3. Procédé de protection selon la revendication 1 ou 2, dans lequel activer ladite mesure de protection comprend : estimer une projection anticipée d'une assiette longitudinale, aussi dénommée assiette longitudinale dynamique ($\Theta_{dyn}$), exprimée selon l'équation suivante :

$$\theta_{dyn} = \theta_{réel} + K * \left(\frac{d\theta_{réel}}{dt}\right)$$

Où,

- $\Theta_{réel}$ est le degré d'assiette longitudinale réel courant ;
- K est un gain permettant de pondérer la dynamique de variation du degré d'assiette longitudinale réel $\Theta_{réel}$.

4. Procédé de protection selon la revendication 3, dans lequel lorsqu'une valeur courante du degré d'assiette longitudinale dynamique ($\Theta_{dyn}$) est supérieure à un seuil prédéterminé d'assiette longitudinale minimal (S3), alors la mesure de protection est désactivée, sinon, un ordre de gouverne est calculé pour corriger l'action de pilotage inappropriée du au moins un pilote.

5. Procédé de protection selon la revendication 4, dans lequel l'ordre de gouverne calculé se voit attribuer un niveau de priorité, et dans lequel, lorsqu'à l'issue d'un vote ledit niveau de priorité de l'ordre de gouverne calculé est supérieur au niveau de priorité d'au moins une autre mesure de protection différente, alors ledit ordre de gouverne est transmis à des actionneurs de gouvernes de l'aéronef (100).

6. Procédé de protection selon la revendication 5, dans lequel lorsque ledit ordre de gouverne est transmis auxdits actionneurs de gouvernes de l'aéronef (100), alors un message d'alerte est transmis pour alerter le au moins un pilote que ladite mesure de protection est activée.

7. Système de détection et de protection (101) pour détecter un pilotage inapproprié lié à une désorientation spatiale liée à une illusion somatogravique subie par au moins un pilote et pour protéger un aéronef (100) contre ledit pilotage inapproprié, ledit système de détection et de protection (101) comprenant de la circuiterie électronique configurée pour:

- obtenir (401) des informations de vol et des informations d'état de l'aéronef (100) ;
- estimer (402) une valeur courante d'un degré d'assiette longitudinale perçu ($\Theta_{perçu}$), tel que perçu par ledit au moins un pilote à partir desdites informations de vol obtenues, selon la formule suivante :

$$\theta_{perçu} = Arctan(\frac{-Nx_{1_{cockpit}}}{Nz_{1_{cockpit}}})$$

où $Nx1_{cockpit}$ est une mesure à l'instant t de l'accélération longitudinale de l'aéronef (100), dans le référentiel de l'aéronef (100), et mesurée dans une zone prédéfinie autour du cockpit ; et

où $Nz1_{cockpit}$ est une mesure à l'instant t de l'accélération verticale de l'aéronef (100), dans le référentiel de l'aéronef (100), et mesurée dans la zone prédéfinie autour du cockpit,

- calculer (403) une différence entre ladite valeur courante du degré d'assiette longitudinale perçu ($\Theta_{perçu}$) et une valeur courante d'un degré d'assiette longitudinale réel ($\Theta_{réel}$), qui est obtenue à partir des informations de vol obtenues,
- et, lorsque la différence entre la valeur courante du degré d'assiette longitudinale perçu ($\Theta_{perçu}$) et la valeur courante du degré d'assiette longitudinale réel ($\Theta_{réel}$) est supérieure ou égale à un seuil prédéterminé d'écart d'assiette longitudinale (S1) alors déterminer (406) si une action de pilotage effectuée par ledit au moins un pilote est inappropriée à partir des informations d'état de l'aéronef (100) obtenues,
- et, lorsque l'action de pilotage effectuée est inappropriée alors activer (408) une mesure de protection contre le pilotage inapproprié.

8. Aéronef (100) comprenant un système de détection et de protection (101) selon la revendication 7.

9. Produit programme d'ordinateur, comportant des instructions entraînant l'exécution, par un processeur, du procédé selon l'une quelconque des revendications 1 à 6, lorsque lesdites instructions sont exécutées par le processeur.

10. Support de stockage, stockant un programme d'ordinateur comportant des instructions entraînant l'exécution, par un processeur, du procédé selon l'une quelconque des revendications 1 à 6, lorsque lesdites instructions sont lues et exécutées par le processeur.

Fig. 1

Fig. 2

Fig. 3

EP 4 687 000 A1

401 ~ R_INFO

402 DET_Θ_p

403 COMP_DIFF_S1

$(\Theta_p - \Theta_r) \geq S1$ ?    non

oui

403_ET_404 ~ 405

oui

$\Theta_r \leq S2$ ?    non

COMP_Θ_r_S2

404

DET_ACT_EQ ~ 406

non

Action de pilotage
inappropriée ?

oui

407 ~ 403_ET_404_ET_406

408 ~ PRO_ON

Fig. 4

14

501 ～ [ DET_Θ$_d$ ]

Θ$_d$ > S3 ?

│ oui                    non │

502 ～ [ PRO_OFF ]

503 ～ [ CALC_GOUV ]

Ordre de gouverne prioritaire ?        non →   Non transmis

│ oui

504 ～ [ TRANS_GOUV ]

Fig. 5

Europäisches
Patentamt

European
Patent Office

Office européen
des brevets

# RAPPORT DE RECHERCHE EUROPEENNE

Numéro de la demande

EP 25 19 0117

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | US 2015/022380 A1 (CONNER KEVIN J [US] ET AL) 22 janvier 2015 (2015-01-22) * [0040]; figures 1-3 * | 1-10 | INV. G05D1/654 G05D1/81 G05D105/22 G05D107/13 |
| Y | LESSARD C S ET AL: "EFFECTS OF ROTATION ON SOMATOGRAVIC ILLUSIONS", IEEE ENGINEERING IN MEDICINE AND BIOLOGY MAGAZINE, IEEE SERVICE CENTER, PISACATAWAY, NJ, US, vol. 19, no. 2, 1 mars 2000 (2000-03-01), pages 59-65, XP000914414, ISSN: 0739-5175, DOI: 10.1109/51.827407 * page 4, colonne de droite * | 1-10 | G05D109/22 G08G5/00 |
| A | US 2006/253001 A1 (SMALL RONALD L [US] ET AL) 9 novembre 2006 (2006-11-09) * alinéa [0050] - alinéa [0061] * | 1-10 | |

DOMAINES TECHNIQUES RECHERCHES (IPC)

G05D

Le présent rapport a été établi pour toutes les revendications

| Lieu de la recherche | Date d'achèvement de la recherche | Examinateur |
|---|---|---|
| Munich | 10 octobre 2025 | Thomann, Jérôme |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

16

**ANNEXE AU RAPPORT DE RECHERCHE EUROPEENNE
RELATIF A LA DEMANDE DE BREVET EUROPEEN NO.**

EP 25 19 0117

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

10-10-2025

| Document brevet cité au rapport de recherche | Date de publication | Membre(s) de la famille de brevet(s) | Date de publication |
|---|---|---|---|
| US 2015022380 A1 | 22-01-2015 | CN 104298846 A<br>EP 2826416 A1<br>US 2015022380 A1 | 21-01-2015<br>21-01-2015<br>22-01-2015 |
| US 2006253001 A1 | 09-11-2006 | AUCUN | |

EPO FORM P0460

Pour tout renseignement concernant cette annexe : voir Journal Officiel de l'Office européen des brevets, No.12/82

**RÉFÉRENCES CITÉES DANS LA DESCRIPTION**

**Documents brevets cités dans la description**

- FR 2986876